# EUROPEAN PATENT APPLICATION

(11) **EP 1 147 878 A2**
(43) Date of publication of application: **24.10.2001**
(21) Application number: 01400982.3
(22) Date of filing: 17.04.2001
(51) Int. Cl.: B29D 11/00, G02B 1/00

(54) **Enhanced moire and irisdescent effects created using dual lenticular lens imaging**

(30) Priority: 17.04.2000 US 550783
(71) Applicant: Impact Group, New York, New York 10171 (US)
(72) Inventor: Parrotta, Michael A., Churchville, Pennsylvania 18966 (US); Peterson, Zane R., Horsham, Pennsylvania 19044 (US); Flowers, Robert J., Coatsville, Pennsylvania 19320 (US)
(74) Representative: Portal, Gérard

(57) **Abstract**

An enhanced moiré or iridescent pattern and a technique for efficiently making the same are described in which a first matrix of lenticular elements (62) is printed onto a first surface of a substrate (64) and a second matrix of lenticular elements (63) is printed onto a second surface of the substrate (64) on the other side of the first matrix of lenticular elements (62), the second matrix of lenticular elements (63) being visible through the substrate. The lenticular elements (62) in the first matrix are positioned to optically interact with the lenticular elements (63) in the second matrix.

## Description

### BACKGROUND OF THE INVENTION

### Field of the Invention

The present invention relates generally to improvements in creating moiré and iridescent effects, and particularly to advantageous aspects of enhanced moiré and iridescent effects created using dual lenticular lens imaging and methods for making same.

### Description of the Prior Art

A moiré pattern is an optical effect created when a first matrix of closely spaced elements is superimposed on top of a second such matrix, such that the two matrices visually interact to create a series of ghostly fringes. Although sometimes considered an undesirable byproduct in certain scanning and printing processes, a moiré pattern may also be deliberately created for esthetic purposes. The appearance of the fringes in the moiré pattern is determined by the shape, spacing, and skew of the elements in the first and second matrices. Typical shapes for individual matrix elements include lines, circles, dots, zigzags, diamonds, ellipses, squares, etc. In addition, interesting variations in the fringe pattern can be achieved by changing the thickness and position of individual elements within the matrices.

One use for moiré patterns is in the field of product packaging and display. This field is highly competitive, and new techniques are constantly being sought to create eye-catching and memorable designs. Thus, there is a need for techniques for enhancing a moiré pattern, such as by adding depth to the pattern.

### SUMMARY OF THE INVENTION

A first aspect of the invention provides a method for creating a pattern, comprising the following steps:
printing a first matrix of lenticular elements forming a first pattern onto a first surface of a substrate;
printing a second matrix of lenticular elements forming a second pattern onto a second surface of the substrate on the other side of the first matrix of lenticular elements, the second matrix of lenticular elements being visible through the substrate,
the lenticular elements in the first matrix being positioned to optically interact with the lenticular elements in the second matrix.

In a first embodiment of the method of the first aspect of the invention, the lenticular elements in the first matrix are skewed with respect to the lenticular elements in the second matrix, such that they interact to create a moiré effect.

Preferably, the first pattern is identical to the second pattern, and wherein the moiré effect is created by rotating the first pattern with respect to the second pattern.

More preferably the moiré effect is created by skewing the first pattern with respect to the second pattern from 5 to 20 degrees.

In a second embodiment of the method of the first aspect of the invention, the lenticular elements in the first matrix are positioned with respect to the lenticular elements in the second matrix, such that they interact to create an iridescent effect.

Preferably, the first pattern is identical to the second pattern, and wherein the iridescent effect is created by aligning the lenticular elements in the first matrix with the lenticular elements in the second matrix.

In both embodiments of the method of the first aspect of the invention, preferably the printing of the first matrix of lenticular elements onto the first surface of the substrate includes the following substeps:
creating a printing screen;
applying a curable gel onto the first surface of the substrate through the printing screen; and
curing the gel into hardened lenticular elements.

In this case, more preferably the substep of creating a print screen includes:
photographically creating a transparency with the first pattern;
mounting the transparency to a printing screen with a photographic emulsion;
exposing the photographic emulsion through the transparency; and
removing the unexposed portion of the emulsion.

In the same manner, in these cases, preferably the printing screen is used in a continuous web process.

In a second aspect, the invention provides a patterned substrate, comprising:
a first matrix of lenticular elements forming a first pattern printed onto a first surface of the substrate;
a second matrix of lenticular elements printed forming a second pattern onto a second surface of the substrate on the other side of the first matrix of lenticular elements, the second matrix of lenticular elements being visible through the substrate,
the lenticular elements in the first matrix being positioned to optically interact with the lenticular elements in the second matrix.

In a first embodiment of the substrate of the second aspect of the invention, the lenticular elements in the first matrix are positioned with respect to the lenticular elements in the second matrix, such that they interact to create a moiré effect.

In this case, preferably the first pattern is identical to the second pattern, and wherein the moiré effect is created by skewing the first pattern with respect to the second pattern.

More preferably, in this case, the moiré effect is created by skewing the first pattern with respect to the second pattern from 5 to 20 degrees.

In a second embodiment of the patterned substrate of the second aspect of the invention, the lenticular elements in the first matrix are positioned with respect to the lenticular elements in the second matrix, such that they interact to create an iridescent effect.

In this case, preferably the first pattern is identical to the second pattern, and wherein the iridescent effect is created by aligning the lenticular elements in the first matrix with the lenticular elements in the second matrix.

In a third aspect, the invention provides a method for creating a pattern, comprising the following steps:
using a coating technique to create a first matrix of lenticular elements on a first surface of a substrate;
using a coating technique to create a second matrix of lenticular elements on a second surface of the substrate on the other side of the first matrix of lenticular elements, the second matrix of lenticular elements being visible through the substrate,
the lenticular elements in the first matrix being positioned to optically interact with the lenticular elements in the second matrix.

In a fourth aspect, the invention provides a security image, comprising:
a first matrix of lenticular elements on a first surface of a substrate;
a second matrix of lenticular elements on a second surface of the substrate on the other side of the first matrix of lenticular elements, the second matrix of lenticular elements being visible through the substrate,
the lenticular elements in the first matrix being positioned with respect to the lenticular elements in the second matrix, such that a moiré pattern is created.

According to a first embodiment of the security image of the fourth aspect of the invention, printing techniques are used to print the security image directly onto a product.

According a second embodiment of the security image of the fourth aspect of the invention, printing techniques are used to print the security image directly onto product packaging.

According to a third embodiment of the security image of the fourth aspect of the invention, printing techniques are used to print the security image directly onto product labeling.

In all the embodiment of the security image of the fourth aspect of the invention, the moiré pattern is scannable.

Additional features and advantages of the present invention will become apparent by reference to the following detailed description and accompanying drawings.

### BRIEF DESCRIPTION OF THE DRAWINGS

Fig. 1 shows a flowchart illustrating an embodiment of a dual lenticular lens imaging method according to the present invention.
Fig. 2 shows a top view of a photographic transparency laid on top of a silkscreen in accordance with the method illustrated in Fig. 1.
Fig. 3 shows a side view of the transparency and silkscreen shown in Fig. 2 mounted into a vacuum exposure chamber.
Fig. 4 shows a diagram of a printer used to print a first matrix of lenticular elements onto a first surface of a substrate using the silkscreen prepared in Figs. 2 and 3.
Fig. 5 shows a diagram of a curing station used to cure the first matrix of lenticular elements printed onto the first substrate surface in Fig. 4.
Fig. 6 shows a diagram illustrating the printing of a second matrix of lenticular elements onto a second surface of the substrate.
Fig. 7 shows a diagram illustrating the curing of the second matrix of lenticular elements printed onto the second substrate surface in Fig. 6.
Fig. 8 shows a partial cross section of a finished substrate with lenticular elements printed onto first and second surfaces.
Fig. 9 shows a diagram of an exemplary lineiform pattern for use in accordance with the present invention.
Fig. 10 shows a diagram of the lineiform pattern shown in Fig. 9 skewed and superimposed over itself to produce a moiré pattern.
Fig. 11A shows a perspective view of a carton upon which an enhanced moiré pattern security image has been printed in accordance with a further embodiment of the present invention.
Fig. 11B shows a plan view of a trading card upon which an enhanced moiré pattern security image has been printed in accordance with a further embodiment of the present invention.

### DETAILED DESCRIPTION

According to one aspect of the present invention, printing techniques are used to create matrices of closely spaced lenticular elements on either side of a light-admitting substrate. One technique that can be used to print lenticular elements onto a substrate is described in United States Patent No. 5,460,679, the specification and drawings of which are incorporated herein by reference in their entirety. In a first embodiment of the present invention, the matrices on either side of the substrate are skewed with respect to each other such that they optically interact to create an enhanced, three-dimensional moiré effect. According to a further aspect of the invention, the matrices, rather than being skewed to produce a moiré pattern, can instead be aligned with each other to create an iridescent effect. Although the following discussion focuses on the use of a silkscreen or serigraphic printing technique, it would also be possible to practice the present invention using other printing techniques, including flexography, gravure, or offset lithography. In addition, it would also be possible to practice the present invention using coating techniques and systems, including continuous coat casting, curtain coat, air knife, knife over roll, reverse roll, etc. Using coat casting techniques, for example, it would be possible to extrude the curable gel described below onto a continuous web of releasable paper, plastic, or foil that has been suitably embossed to create the desired pattern of lenticular elements in the cured gel.

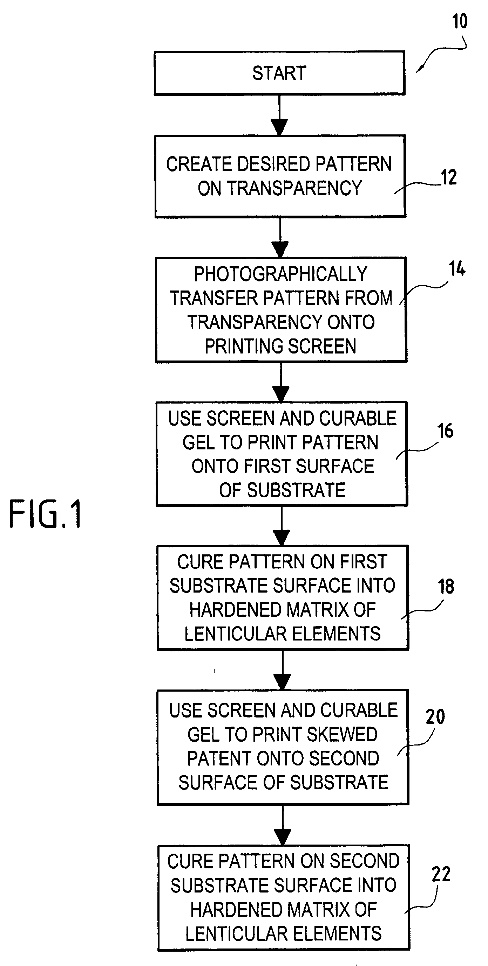

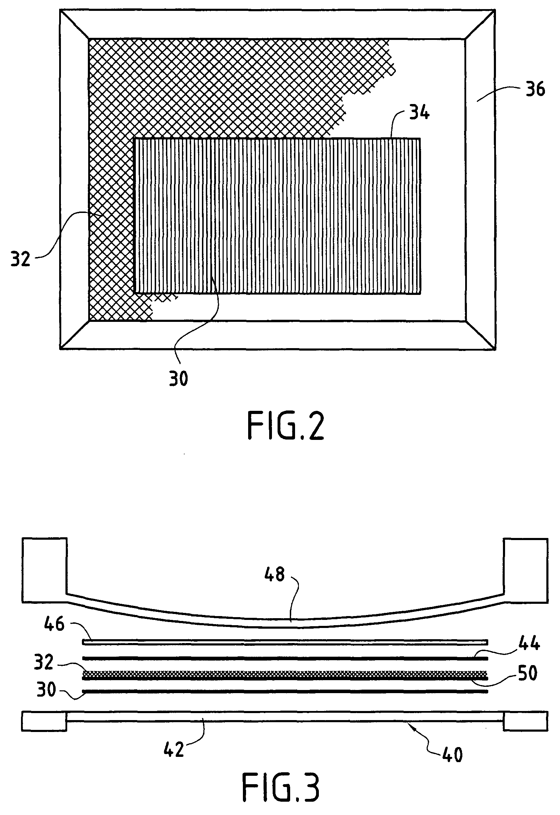

Fig. 1 shows a flowchart of an embodiment of a dual lenticular lens imaging method 10 according to the present invention. In step 12, a desired pattern for a matrix of lenticular elements is created on a transparency. In this embodiment of the invention, the pattern is created photographically, although other techniques can be used. In step 14, a photographic process is used to transfer the pattern from the transparency onto a silkscreen. In step 16, a viscous, curable gel is extruded through the silkscreen onto a first surface of a substrate. The physical properties of the gel and the shape, dimensions, and arrangement of individual elements within the pattern matrix are such that the extrusion of the gel through the silkscreen during the printing process causes individual lenses with a desired focal length to form at each of the elements of the printed pattern. In step 18, the printed gel is cured into hardened lenticular elements. The curing is accomplished by exposing the gel to ultraviolet light although, depending upon the gel used, other techniques may be used, such as exposing the gel to an electron beam. In step 20, the substrate is inverted and the silkscreen and the substrate are skewed by a desired amount relative to each other. The silkscreen is then used to print curable gel onto a second surface of the substrate on the other side of the first matrix of hardened lenticular elements. In step 22, the gel on the second substrate surface is cured into a second matrix of hardened lenticular elements. Steps 12-22 of the method 10 are illustrated in greater detail in Figs. 2 through 10, discussed below.

Figs. 2 and 3 illustrate one technique that can be used to transfer a pattern from a transparency 30 onto a silkscreen 32. Fig. 2 shows a top view of a transparency 30 laid on top of a silkscreen 32. The pattern 34 on the transparency 30 is created using a photographic technique, although other techniques may be used. In the present example, the pattern 34 on the transparency 30 comprises a series of closely spaced opaque lines. It has been determined that a suitable moiré effect may be created using a density of 150-300 lines per inch or, advantageously, 175-200 lines per inch. The number of lines per inch and the thickness of individual lines in the pattern may be varied to achieve a desired visual effect. However, if the lines are too thick or too close together, there is a risk that the printed lines of viscous gel will bleed into each other, interfering with the creation of individuated lenticular elements. Also, if the lines are too thin or too far apart, this increases the "gray" space between individual elements, which may interfere with the creation of a desired effect. Although Fig. 2 shows a pattern consisting of a series of closely spaced lines, the present invention is not restricted to lineiform patterns. Other closely spaced elements may be used, including circles, diamonds, zigzags, ellipses, squares, etc.

As shown in Fig. 2, the silkscreen 32, which is stretched across a frame 36, comprises a fine mesh that is coated by a nonporous photographic emulsion (shown as element 50 in Fig. 3). Exposing portions of the emulsion 50 to light will produce a photochemical reaction in those portions. In subsequent processing, non-exposed portions of the emulsion will be chemically washed away, uncovering porous mesh underneath.

Fig. 3 shows a side view of the transparency 30 and silkscreen 32 loaded into a vacuum exposure chamber 40. As shown in Fig. 3, the transparency 30 is laid on top of a glass 42, and the silkscreen 32 is placed over the transparency 30. A red polyester film 44 is then placed over the silkscreen 32, following by a rubber blanket 46 and an outer blanket 48. The elements shown in Fig. 3 are sealed together when the vacuum chamber 40 is evacuated. The photographic emulsion 50 on the silkscreen 32 is then exposed to light through the glass 42 and transparency 30, causing the pattern on the transparency 30 to be photographically transferred onto the emulsion 50. The exposed screen 32 is then removed from the vacuum exposure chamber 40 and treated chemically to wash away the non-exposed portions of the emulsion 50. As mentioned above, when the emulsion 50 is washed away, it uncovers the porous mesh underneath the emulsion 50.

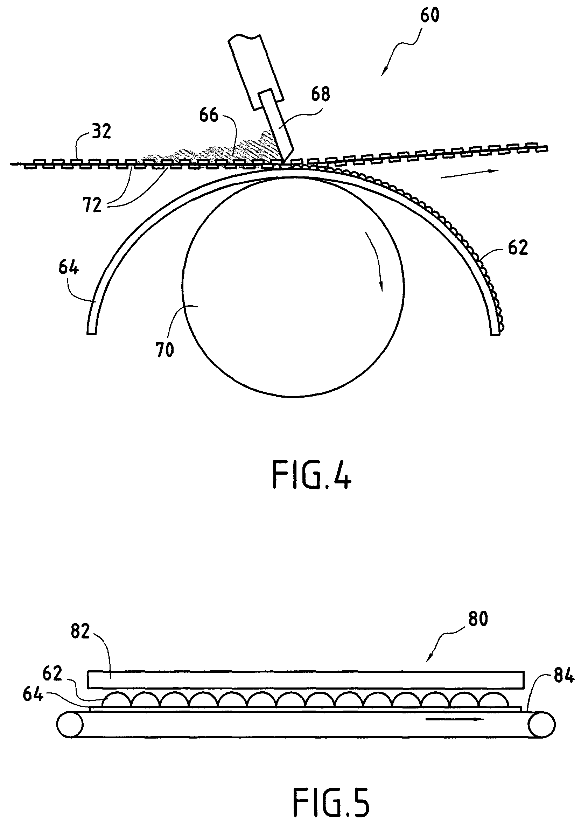

Fig. 4 is a diagram of a printing press 60, illustrating the printing of a first matrix of lenticular elements 62 onto a first surface of a substrate 64. For the purposes of illustration, in Fig. 4 the screen 32 has been oriented such that the lineiform lenticular elements 62 are transverse to the motion of the screen 32 and cylinder 70. However, in practice, it has been found that it is advantageous to orient the screen 32 such that the lineiform lenticular elements 62 are aligned with the motion of the screen 32 and cylinder 70.

In the present embodiment of the invention, the substrate 64 is provided by a plastic film ranging in thickness from 6 mils and below to 30 mils and above. Suitable plastic films include, but are not limited to, polyvinylchloride, polyesters, polypropylene, polycarbonate, polyethylene, cellulose acetate, polyurethane, polystyrene or polyamide. As shown in Fig. 4, the curable gel 66 is extruded through the portions 72 of the silkscreen 32 where the emulsion 50 (Fig. 3) has been chemically washed away. The gel 66 is extruded through the screen 32 by a squeegee 68. In the present embodiment, the squeegee 68 remains stationary, and the screen 32 and the substrate 64 are advanced by a rotating cylinder 70. As mentioned above, the physical properties of the gel 66 are such that, after the gel 66 has been extruded through the screen 32 onto the substrate 64, the individual lines of gel making up the printed pattern on the substrate assume a lenticular shape. In the present embodiment of the invention, the gel is a composite made from mono- and multifunctional acrylates (20-60%) with epoxy/urethane oligimers (40-80%). Viscosity adjustments are made using fumed silica powder. This gel system is cured by ultraviolet radiation. It is also possible to use printing techniques to fabricate, for example, a fresnel lens, a lens with a textured surface, a lens with an undercut, or a cluster of anamorphic lenses. In addition, transparent or color-dyed lenses can be made to provide a special display creating the illusion of morphing or movement as the angle of sight changes.

Fig. 5 shows a diagram of a curing station 80 for curing the lenticular elements 62 that have been printed onto the substrate 64. The substrate 64 is passed underneath an ultraviolet light 82 by a conveyor belt 84 to cause the elements 62 to harden.

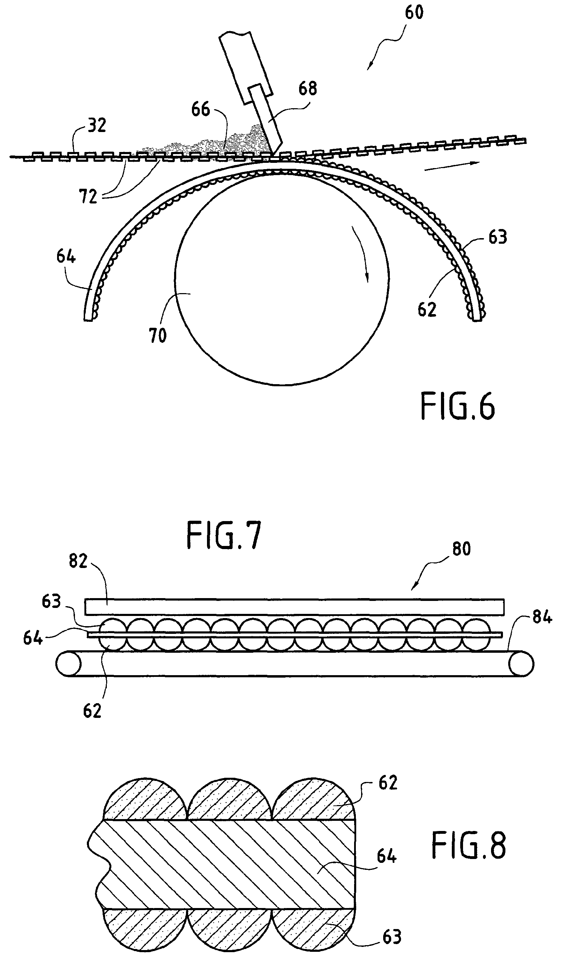

As illustrated in Fig. 6, after the lenticular elements 62 have been formed onto a first surface of the substrate 64 and cured, a second matrix of lenticular elements 63 is then printed onto a second surface of the substrate 64 on the other side of the first set of lenticular elements 62. As shown in Fig. 7, the second matrix is then cured in curing station 80. Fig. 8 shows a cross section of a completed section of substrate 64, with a first set of lenticular elements 62 printed and cured onto the upper surface of the substrate 64 and a second set of lenticular elements 63 printed and cured onto the lower surface of the substrate 64.

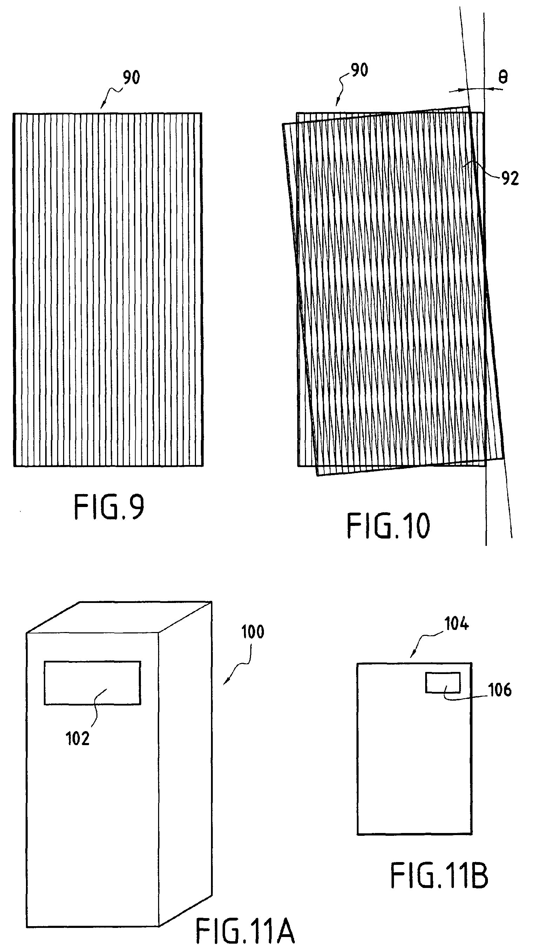

As discussed above, a moiré effect is created by printing the second set of lenticular elements 63 in a skewed position relative to the first set of lenticular elements 62. Fig. 9 shows a diagram of a lineiform pattern 90, such as the one printed on the first surface of the substrate 64 in Fig. 4. For purposes of illustration, the individual lines in the pattern are drawn further apart than they appear in the actual pattern. Fig. 10 shows the pattern 90 that has been skewed by an angle θ and superimposed upon itself. This causes a periodic fringe 92 to appear, where the individual lines in the pattern intersect. Through experimentation, it has been determined that the most desirable effects, from an esthetic point of view, are created when the value for θ is between 5 and 20 degrees. If θ exceeds 20 degrees, the resulting fringe effect becomes smaller and compacted, which may be used in certain circumstances to create a specific effect. If θ is under 5 degrees, it has been observed that, rather than a moiré effect, an iridescent effect is created, as the fringes are less clearly defined. This may of course be desirable in certain situations. The use of lenticular elements 62 and 63 to implement the lineiform pattern on either side of the substrate 64 produces a deep, three-dimensional enhanced moiré effect. There are many possible uses for this enhanced moiré pattern. These include, but are not limited to: calendars, postcards, decoding cards, business cards, bookmarks, computer diskette cases, compact disk cases, DVD cases, video cassette cases, audio cassette cases, folding carton boxes, display boxes, bags, game pieces, phone cards, security ID cards, book covers, picture frames, award displays, bumper stickers, credit cards, place mats, traffic signs, special TV screens, computer screens, hang tag display tabs, gift cards, trading cards (including collectibles), greeting cards, window décor, as well as other products.

Another use for the present invention is to place a security image onto a product or product packaging. It would be possible for the image to be scannable, using ultraviolet scanning or other suitable techniques, for both security and inventory purposes. Fig. 11A shows a perspective view of a carton 100 having a security image 102 fabricated thereon, and Fig. 11B shows a plan view of a trading card 104, having a security image 106 fabricated thereon. The security images 102 and 104 may be of any size and shape, and may be placed at any desirable location. For example, in box 100 (Fig. 11A), the security image may be placed, if desired, on an interior dust flap.

An enhanced moiré pattern according to the present invention is highly suitable for use as a security image. It will be appreciated from the above discussion that the present invention can be used to create a virtually infinite variety of moiré patterns, depending upon the shape and size of the elements in each of the matrices and the degree of skew. Thus, the present invention can be used to create a security image that, on the one hand, is striking and easy to recognize by a simple visual inspection but that, on the other hand, is extremely difficult to make an unauthorized copy of. Because of the nature of the enhanced moiré effect, and depending upon the particular moiré pattern designed for security purposes, even the slightest of variations in the matrix elements, skew, materials, or manufacturing techniques may produce a recognizable change in the resulting pattern. Thus, it would be possible to design an enhanced moiré image that would be virtually impossible to copy without using the original silkscreens, gel, etc.

A security image implemented in accordance with the present invention has several advantages over other security imaging systems including, for example, the holograms that appear on certain credit cards. First, the present invention is significantly cheaper and easier to implement than a hologram. The security image can be printed onto the product or product packaging as part of the same overall process for printing text and graphics onto the product or product packaging, using the same printing equipment. Thus, security images can be easily added to already existing products and product packaging having text and graphics printed thereon. Further, the present invention can also be used to print security images onto a flexible surface. Thus, for example, it would be possible to print security images on clothing labels or even directly onto clothing. Other advantages will be apparent to those of skill in the art.

It will be apparent that the above-described techniques can be altered without departing from the spirit of the invention. First of all, two separate printing screens and patterns can be used. Second, both sides of the substrate can be printed simultaneously. Third, the process may be adapted for use in a continuous web process, in which the printing screens are mounted onto rotating drums that can print the pattern over and over again onto a continuous length of substrate that can be cut to the desired lengths.

It will be appreciated that the present invention provides great flexibility in the creation of a moiré or iridescent pattern. The use of photographic and printing techniques to create the lenticular elements on either side of the substrate allows great precision in the creation of patterns. In addition, it is possible to use various printing techniques, or combinations of printing techniques, to create the desired effect. Although the first embodiment of the invention describes the use of a single-sheet screen technique, it would be possible to practice the present invention using, for example, a gravure or flexographic technique. In addition, it would be possible to use a continuous web technique, as well as double-sided printing techniques to increase manufacturing efficiency.

While the foregoing description includes details which will enable those skilled in the art to practice the invention, it should be recognized that the description is illustrative in nature and that many modifications and variations thereof will be apparent to those skilled in the art having the benefit of these teachings. It is accordingly intended that the invention herein be defined solely by the claims appended hereto and that the claims be interpreted as broadly as permitted by the prior art.

## Claims

1. A method for creating a pattern, comprising the following steps:
printing a first matrix of lenticular elements (62) forming a first pattern (90) onto a first surface of a substrate (64);
printing a second matrix of lenticular elements (63) forming a second pattern onto a second surface of the substrate (64) on the other side of the first matrix of lenticular elements (62), the second matrix of lenticular elements (63) being visible through the substrate (64),
the lenticular elements (62) in the first matrix being positioned to optically interact with the lenticular elements (63) in the second matrix.

2. The method of claim 1, wherein the lenticular elements in the first matrix (62) are skewed with respect to the lenticular elements (63) in the second matrix, such that they interact to create a moiré effect.

3. The method of claim 1 or 2, wherein the first pattern (90) is identical to the second pattern, and wherein the moiré effect is created by rotating the first pattern (90) with respect to the second pattern.

4. The method of claim 3, wherein the moiré effect is created by skewing the first pattern (90) with respect to the second pattern from 5 to 20 degrees.

5. The method of claim 1, wherein the lenticular elements (62) in the first matrix are positioned with respect to the lenticular elements (63) in the second matrix, such that they interact to create an iridescent effect.

6. The method of claim 5, wherein the first pattern (90) is identical to the second pattern, and wherein the iridescent effect is created by aligning the lenticular elements (62) in the first matrix with the lenticular elements (63) in the second matrix.

7. The method of anyone of claims 1 to 6, wherein the printing of the first matrix of lenticular elements (62) onto the first surface of the substrate (64) includes the following substeps:
creating a printing screen (32);
applying a curable gel (66) onto the first surface of the substrate (64) through the printing screen (32); and
curing the gel (66) into hardened lenticular elements (62).

8. The method of claim 7, wherein the substep of creating a print screen includes:
photographically creating a transparency (30) with the first pattern (90);
mounting the transparency (30) to a printing screen (32) with a photographic emulsion (50);
exposing the photographic emulsion (50) through the transparency (30); and
removing the unexposed portion (72) of the emulsion (50).

9. The method of claim 7 or 8, wherein the printing screen (32) is used in a continuous web process.

10. A patterned substrate, comprising:
a first matrix of lenticular elements (62) forming a first pattern printed onto a first surface of the substrate (64);
a second matrix of lenticular elements (63) forming a second pattern printed onto a second surface of the substrate on the other side of the first matrix of lenticular elements (62), the second matrix of lenticular elements (63) being visible through the substrate (64),
the lenticular elements (62) in the first matrix being positioned to optically interact with the lenticular elements (63) in the second matrix.

11. The substrate of claim 10, wherein the lenticular elements (62) in the first matrix are positioned with respect to the lenticular elements (63) in the second matrix, such that they interact to create a moiré effect.

12. The substrate of claim 10 or 11, wherein the first pattern (90) is identical to the second pattern, and wherein the moiré effect is created by skewing the first pattern (90) with respect to the second pattern.

13. The substrate of claim 12, wherein the moiré effect is created by skewing the first pattern (90) with respect to the second pattern from 5 to 20 degrees.

14. The substrate of claim 10, wherein the lenticular elements (62) in the first matrix are positioned with respect to the lenticular elements (63) in the second matrix, such that they interact to create an iridescent effect.

15. The substrate of claim 14, wherein the first pattern (90) is identical to the second pattern, and wherein the iridescent effect is created by aligning the lenticular elements (62) in the first matrix with the lenticular elements (63) in the second matrix.

16. A method for creating a pattern, comprising the following steps:
using a coating technique to create a first matrix of lenticular elements (62) on a first surface of a substrate (64);
using a coating technique to create a second matrix of lenticular elements (63) on a second surface of the substrate (64) on the other side of the first matrix of lenticular elements (62), the second matrix of lenticular elements (63) being visible through the substrate (64),
the lenticular elements (62) in the first matrix being positioned to optically interact with the lenticular elements (63) in the second matrix.

17. A security image (102, 106), comprising:
a first matrix of lenticular elements (62) on a first surface of a substrate (64);
a second matrix of lenticular elements (63) on a second surface of the substrate (64) on the other side of the first matrix of lenticular elements (62), the second matrix of lenticular elements (63) being visible through the substrate (64),
the lenticular elements in the first matrix (62) being positioned with respect to the lenticular elements (63) in the second matrix, such that a moiré pattern is created.

18. The security image (102, 106) of claim 17, wherein printing techniques are used to print the security image (102, 106) directly onto a product.

19. The security image (102) of claim 17, wherein printing techniques are used to print the security image (102) directly onto product packaging.

20. The security image (106) of claim 17, wherein printing techniques are used to print the security image (106) directly onto product labeling.

21. The security image (102, 106) of anyone of claims 17 to 20, wherein the moiré pattern is scannable.
